# EUROPEAN PATENT SPECIFICATION

(11) **EP 3 726 085 B1**
(45) Date of publication and mention of the grant of the patent: **06.03.2024**
(21) Application number: 19211314.0
(22) Date of filing: 25.11.2019
(51) Int. Cl.: F16D 13/62

(54) **CLUTCH SYSTEMS FOR TRANSMISSIONS**
KUPPLUNGSSYSTEM FÜR GETRIEBE
SYSTÈMES D'EMBRAYAGE POUR TRANSMISSIONS

(30) Priority: 18.04.2019 US 201916388123
(43) Date of publication of application: 21.10.2020
(73) Proprietor: Hamilton Sundstrand Corporation, Charlotte, NC 28217-4578 (US)
(72) Inventor: BORTOLI, Stephen Michael, Roscoe, IL Illinois 61073 (US); FINKE, Aaron M., Janesville, WI Wisconsin 53545 (US); FRANKLIN, Mark J., Janesville, WI Wisconsin 53546 (US)
(74) Representative: Dehns

(56) References cited:
- JP-U- S63 198 837
- US-A1- 2008 015 085
- US-A1- 2012 247 903
- US-B1- 6 202 499
- US-B1- 9 528 557
- US-B2- 7 024 751

## Description

### BACKGROUND

### 1. Field

This invention relates to transmissions, more specifically to clutch systems for transmissions.

### 2. Description of Related Art

Many shifting transmissions contain a plurality of clutches (or clutch packs) and different gear sets in order to selectively change transmission gear ratios. These clutch packs open and close to route power through these different gear sets. Normally the clutch selectively transmits power along its axis to a second shaft, which is co-axial. That shaft power can be moved to a layshaft through different gear ratios.

Such conventional methods and systems have generally been considered satisfactory for their intended purpose. However, there is still a need in the art for improved clutch systems. The present invention provides a solution for this need. US 2008/015085 relates to a transmission element for a traction chain of the parallel hybrid type. US 7 024 751 relates to a housing for a vehicle component. US 6 202 499 relates to an automotive transmission.

### SUMMARY

A clutch basket of a clutch for a transmission is provided in claim 1 and includes a clutch housing shaped to house a clutch pack in the clutch housing, wherein the clutch housing has a housing outer diameter, a neck integral with and extending axially from the clutch housing, the neck having a neck outer diameter smaller than the housing outer diameter, at least a first gear integrally formed or mounted on the neck and extending radially outward from the neck, wherein the first gear includes a first gear outer diameter.

According to the invention, the housing outer diameter is different from the first gear outer diameter. The first gear outer diameter is smaller than the housing outer diameter such that the clutch housing extends radially outward past the first gear.

The clutch housing includes a second neck portion extending axially from the neck away from the clutch housing. The second neck portion includes a second neck outer diameter smaller than the neck outer diameter. The second neck portion includes a second gear integrally formed or mounted thereon and extending radially outward from the second neck portion, wherein the second gear includes a second gear outer diameter.

The second gear outer diameter is different from the first gear outer diameter. According to the invention, the second gear outer diameter is smaller than the first gear outer diameter such that the first gear extends radially outward of the second gear. The second neck portion is formed integral with or separately attached to the neck.

A clutch for a transmission can include any embodiment of a clutch basket disclosed herein (e.g., as described above). The clutch can include a clutch pack disposed within the clutch housing between the clutch housing and an inner clutch member. The clutch pack is operatively connected to the clutch housing and the inner clutch member to engage the inner clutch member to the clutch housing when compressed. The clutch can include a clutch actuator configured to compress the clutch pack to engage the clutch housing to the inner clutch member.

A transmission can include an input shaft having a plurality of input gears and at least one clutch as disclosed herein (e.g., as described above). For example, the first gear of the clutch can be connected to an input gear of the plurality of input gears. In certain embodiments, the second gear can be connected to a second input gear of the plurality of input gears. Certain embodiments of a transmission include multiple embodiments of a clutch basket as disclosed herein.

These and other features of the embodiments of the invention will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the present invention without undue experimentation, embodiments thereof will be described in detail herein below with reference to certain figures, wherein:
Fig. 1 is a cross-sectional view of an embodiment of a clutch having an embodiment of a clutch basket in accordance with the present invention;
Fig. 2 is a cross-sectional view of an embodiment of a clutch having an embodiment of a clutch basket in accordance with the present invention;
Fig. 3 is a perspective view of an embodiment of a clutch in accordance with the present invention; and
Fig. 4 is a cross-sectional view of an embodiment of a dual clutch arrangement.

### DETAILED DESCRIPTION

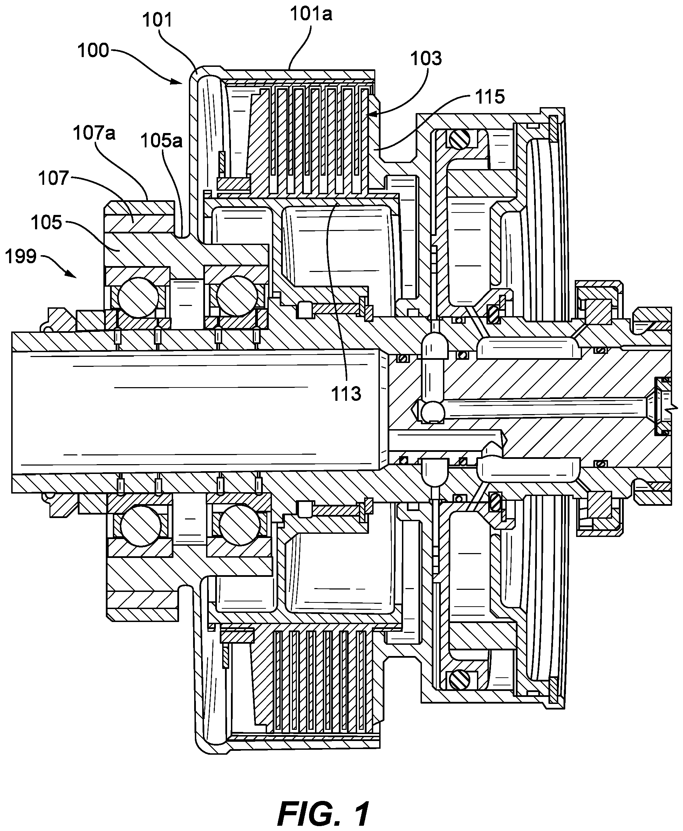

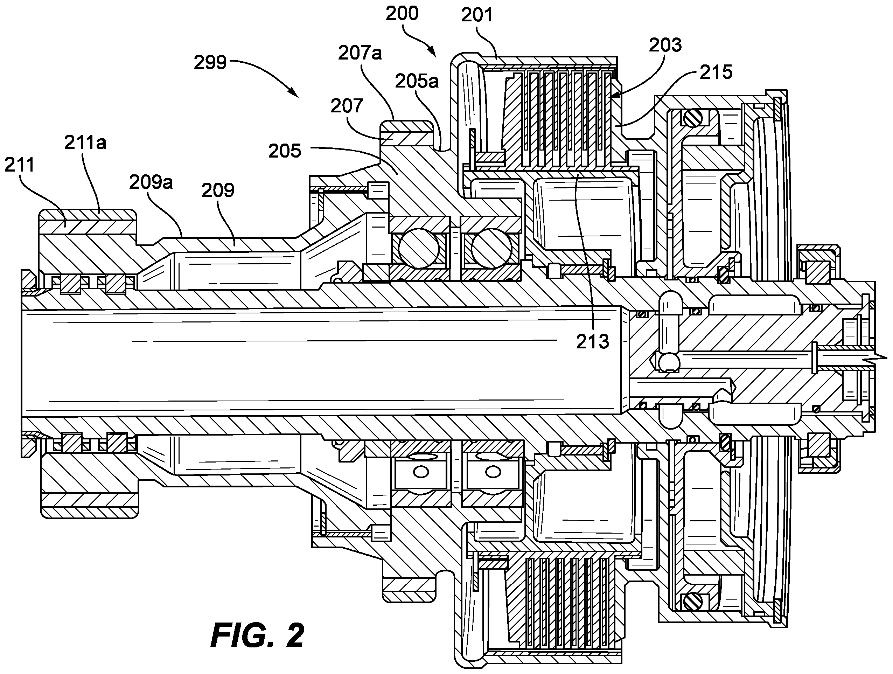

Reference will now be made to the drawings wherein like reference numerals identify similar structural features or aspects of the the present invention. For purposes of explanation and illustration, and not limitation, an illustrative view of an embodiment of a clutch basket in accordance with the invention is shown in Fig. 1 and is designated generally by reference character 100. Other embodiments and/or aspects of this invention are shown in Figs. 2-4.

Referring to Fig. 1, a clutch basket 100 of a clutch 199 for a transmission (e.g., for a low spool turbomachine) includes a clutch housing 101 shaped to house a clutch pack 103 in the clutch housing 101. The clutch housing 101 has a housing outer diameter 101a.

The clutch basket 100 includes a neck 105 integral with and extending axially from the clutch housing 101. The neck 105 includes a neck outer diameter 105a smaller than the housing outer diameter 101a. Any other suitable dimension is contemplated herein.

The clutch basket 100 includes at least a first gear 107 integrally formed or mounted on the neck 105 and extending radially outward from the neck 105. The first gear 107 has a first gear outer diameter 107a.

According to the invention, the housing outer diameter 101a is different from the first gear outer diameter 107a. For example, as shown, the first gear outer diameter 107a is smaller than the housing outer diameter 101a such that the clutch housing 101 extends radially outward past the first gear 107.

Referring additionally to Fig. 2, the clutch basket 200 includes a second neck portion 209 extending axially from the neck 205 away from the clutch housing 201. The second neck portion 209 includes a second neck outer diameter 209a smaller than the neck outer diameter 205a.

The second neck portion 209 includes a second gear 211 integrally formed or mounted thereon and extending radially outward from the second neck portion 209. The second gear 211 includes a second gear outer diameter 211a.

The second gear outer diameter 211a is different from the first gear outer diameter 207a of the first gear 207. According to the invention, the second gear outer diameter 211a is smaller than the first gear outer diameter 207a such that the first gear 207 extends radially outward of the second gear 211.

The second neck portion 209 is formed integral with or separately attached to (e.g., as shown) the neck 205. For example, the second neck portion 209 can be splined to the neck 205.

Certain embodiments of a clutch basket, e.g., 100, 200, can be made by additive manufacturing or casting, for example. Any other suitable manufacturing process is contemplated herein.

In accordance with at least one aspect of the present invention, a clutch, e.g., 199, 299 for a transmission can include any embodiment of a clutch basket, e.g., 100, 200 disclosed herein (e.g., as described above). The clutch, e.g., 199, 299, includes a clutch pack 103, 203 disposed within the clutch housing 101, 201 between the clutch housing 101, 201 and an inner clutch member 113, 213. The clutch pack 103, 203 can be operatively connected to the clutch housing 101, 201 and the inner clutch member 113, 213 to engage the inner clutch member 113, 213 to the clutch housing 201 when compressed.

In certain embodiments, the clutch pack 103, 203 can include one or more friction plates or members connected to the inner diameter of the clutch housing 101, 201 and one or more friction plates or members connected to the inner clutch member 113, 213 configured to move relative to the one or more friction plates or members connected to the clutch housing 101, 201 to be selectively contacted therewith. Any suitable clutch pack is contemplated herein as appreciated by those having ordinary skill in the art in view of this disclosure.

The clutch, e.g., 100, 200, can include a clutch actuator 115, 215 configured to compress the clutch pack 103, 203 to engage the clutch housing 101 to the inner clutch member 213. Any suitable actuator (e.g., hydraulic as shown) is contemplated herein.

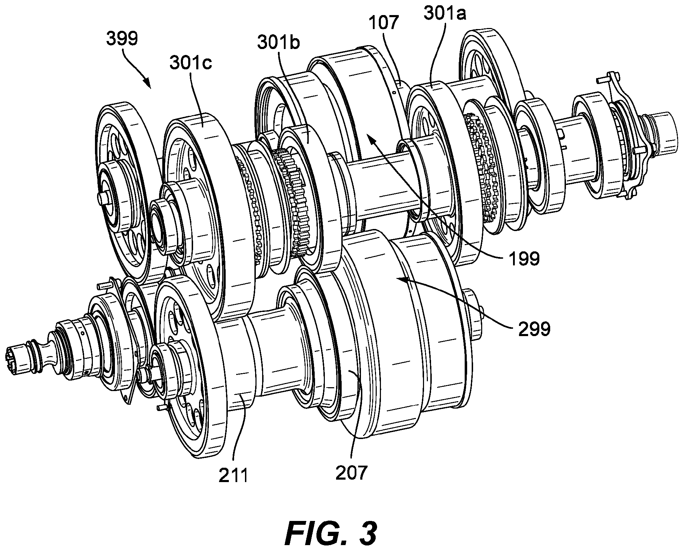

Referring additionally to Fig. 3, a transmission 399 can include an input shaft having a plurality of input gears 301a, b, c and at least one clutch, e.g., 199, 299 as shown, as disclosed herein (e.g., as described above). For example, the first gear 107, 207 of the clutch 199, 299 can be connected to an input gear 301a, 301b of the plurality of input gears. In certain embodiments, the second gear 211 can be connected to a second input gear 301c of the plurality of input gears. Certain embodiments of a transmission include multiple embodiments of a clutch and/or clutch basket as disclosed herein, e.g., as shown in Fig. 3.

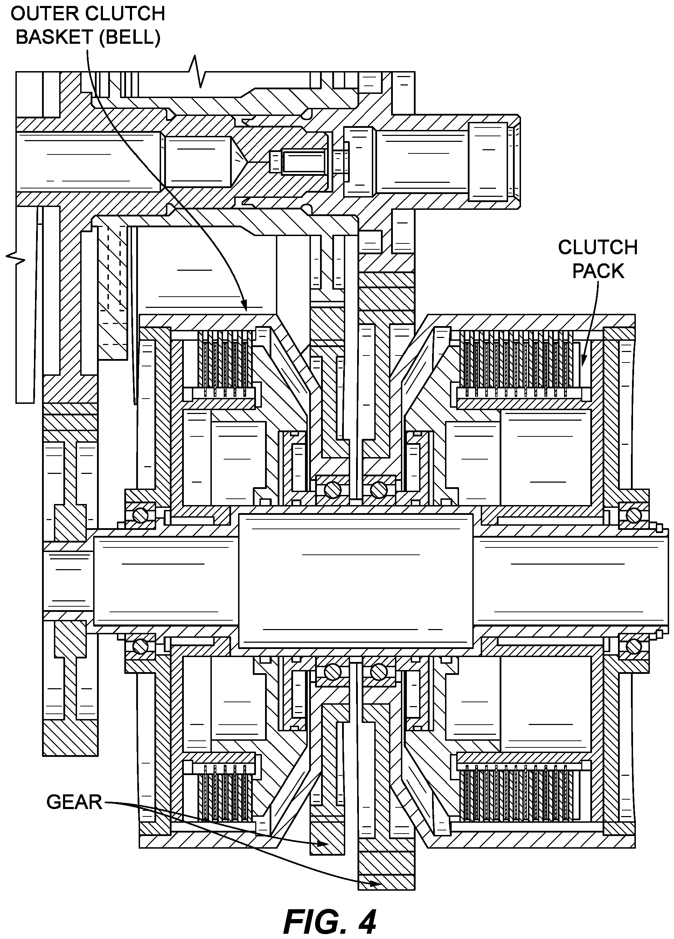

Fig. 4 shows another embodiment having a gear mounted to each clutch basket of a dual clutch. Any suitable mount type (e.g., friction fit, spline, integral formation) is contemplated herein.

Embodiments include a clutch basket (clutch bell) housing with a gear mounted and/or integral with the clutch housing. Embodiments include clutch basket mounted gears for a transmission for an aircraft low spool engine. Embodiments can be beneficial for side-by-side shaft transmission arrangements. Embodiments can reduce weight, size, and bearing count, for example, which can be especially beneficial for aircraft applications.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

Any suitable combination(s) of any disclosed embodiments and/or any suitable portion(s) thereof are contemplated herein as appreciated by those having ordinary skill in the art.

## Claims

1. A clutch basket (100) of a clutch (199) for a transmission, comprising:
a clutch housing (101) shaped to house a clutch pack (103) in the clutch housing (101), wherein the clutch housing (101) has a housing outer diameter (101A);
a neck (105) integral with and extending axially from the clutch housing (101), the neck (105) having a first neck outer diameter (105A) smaller than the housing outer diameter (101A); and
at least a first gear (107) integrally formed or mounted on the neck (105) and extending radially outward from the neck (105), wherein the first gear (107) includes a first gear outer diameter (107A); and **characterized in that** it further comprises
a second neck portion (209) extending axially from the neck away from the clutch housing, wherein the second neck portion is formed integral with or separately attached to the neck, wherein the second neck portion (209) includes a second neck outer diameter smaller than the first neck outer diameter, wherein the second neck portion (209) includes a second gear integrally formed or mounted thereon and extending radially outward from the second neck portion, wherein the second gear includes a second gear outer diameter, wherein the second gear outer diameter is different from the first gear outer diameter (107A), and wherein the second gear outer diameter is smaller than the first gear outer diameter (107A) such that the first gear extends radially outward of the second gear.

2. The clutch basket of claim 1, wherein the housing outer diameter (101A) is different from the first gear outer diameter (107A).

3. The clutch basket of claim 2, wherein the first gear outer diameter (107A) is smaller than the housing outer diameter (101A) such that the clutch housing extends radially outward past the first gear.

4. A clutch for a transmission, comprising:
the clutch basket of any preceding claim;
an inner clutch member (113, 213) disposed within the clutch basket;
the clutch pack (103) disposed within the clutch housing between the clutch housing and an inner clutch member the clutch pack operatively connected to the clutch housing and the inner clutch member to engage the inner clutch member to the clutch housing when compressed; and
a clutch actuator (115, 215) configured to compress the clutch pack to engage the clutch housing to the inner clutch member.

5. A transmission, comprising:
an input shaft having a plurality of input gears; and
at least one clutch having:
a clutch basket as claimed in any of claims 1-3,
wherein the first gear is connected to an input gear of the plurality of input gears.

## Patentansprüche

1. Kupplungskorb (100) einer Kupplung (199) für ein Getriebe, umfassend:
ein Kupplungsgehäuse (101), das so geformt ist, dass es ein Kupplungspaket (103) im Kupplungsgehäuse (101) aufnimmt, wobei das Kupplungsgehäuse (101) einen Gehäuseaußendurchmesser (101A) aufweist;
einen Hals (105), der einstückig mit dem Kupplungsgehäuse (101) gebildet ist und sich axial davon erstreckt, wobei der Hals (105) einen ersten Halsaußendurchmesser (105A) aufweist, der kleiner als der Gehäuseaußendurchmesser (101A) ist; und
mindestens ein erstes Zahnrad (107), das einstückig an dem Hals (105) gebildet oder angebracht ist und sich von dem Hals (105) radial nach außen erstreckt, wobei das erste Zahnrad (107) einen ersten Zahnradaußendurchmesser (107A) aufweist; und **dadurch gekennzeichnet, dass** er ferner Folgendes umfasst einen zweiten Halsabschnitt (209), der sich von dem Hals axial weg von dem Kupplungsgehäuse erstreckt, wobei der zweite Halsabschnitt einstückig mit dem Hals gebildet oder separat daran befestigt ist, wobei der zweite Halsabschnitt (209) einen zweiten Halsaußendurchmesser aufweist, der kleiner als der erste Halsaußendurchmesser ist, wobei der zweite Halsabschnitt (209) ein zweites Zahnrad umfasst, das einstückig daran gebildet oder angebracht ist und sich von dem zweiten Halsabschnitt radial nach außen erstreckt, wobei das zweite Zahnrad einen zweiten Zahnradaußendurchmesser umfasst, wobei sich der zweite Zahnradaußendurchmesser von dem Außendurchmesser (107A) des ersten Zahnrads unterscheidet und wobei der Außendurchmesser des zweiten Zahnrads kleiner als der Außendurchmesser (107A) des ersten Zahnrads ist, derart, dass sich das erste Zahnrad radial auswärts des zweiten Zahnrads erstreckt.

2. Kupplungskorb nach Anspruch 1, wobei sich der Gehäuseaußendurchmesser (101A) von dem Außendurchmesser (107A) des ersten Zahnrads unterscheidet.

3. Kupplungskorb nach Anspruch 2, wobei der Außendurchmesser (107A) des ersten Zahnrads kleiner als der Gehäuseaußendurchmesser (101A) ist, derart, dass sich das Kupplungsgehäuse radial auswärts über das erste Zahnrad hinaus erstreckt.

4. Kupplung für ein Getriebe, umfassend:
den Kupplungskorb nach einem der vorhergehenden Ansprüche;
ein inneres Kupplungselement (113, 213), das in dem Kupplungskorb angeordnet ist;
wobei das Kupplungspaket (103) innerhalb des Kupplungsgehäuses zwischen dem Kupplungsgehäuse und einem inneren Kupplungselement angeordnet ist, wobei das Kupplungspaket betriebstechnisch mit dem Kupplungsgehäuse und dem inneren Kupplungselement verbunden ist, um das innere Kupplungselement mit dem Kupplungsgehäuse in Eingriff zu bringen, wenn es zusammengedrückt wird; und
ein Kupplungsstellglied (115, 215), das dazu konfiguriert ist,
das Kupplungspaket zusammenzudrücken, um das Kupplungsgehäuse mit dem inneren Kupplungselement in Eingriff zu bringen.

5. Getriebe, umfassend:
eine Eingangswelle mit einer Vielzahl von Eingangszahnrädern;
und mindestens eine Kupplung, aufweisend:
einen Kupplungskorb nach einem der Ansprüche 1-3,
wobei das erste Zahnrad mit einem Eingangszahnrad der Vielzahl von Eingangszahnrädern verbunden ist.

## Revendications

1. Panier d'embrayage (100) d'un embrayage (199) pour une transmission, comprenant :
un carter d'embrayage (101) formé pour loger un bloc d'embrayage (103) dans le carter d'embrayage (101), dans lequel le carter d'embrayage (101) présente un diamètre extérieur de carter (101A) ;
un col (105) solidaire du carter d'embrayage (101) et s'étendant axialement à partir de celui-ci, le col (105) présentant un premier diamètre extérieur de col (105A) inférieur au diamètre extérieur de carter (101A) ; et
au moins un premier engrenage (107) formé ou monté d'un seul tenant sur le col (105) et s'étendant radialement vers l'extérieur à partir du col (105), dans lequel le premier engrenage (107) comporte un diamètre extérieur de premier engrenage (107A) ; et **caractérisé en ce qu'**il comprend en outre
une seconde partie de col (209) s'étendant axialement à partir du col en s'éloignant du carter d'embrayage, dans lequel la seconde partie de col est formée d'un seul tenant ou fixée séparément au col, dans lequel la seconde partie de col (209) comporte un second diamètre extérieur de col inférieur au premier diamètre extérieur de col, dans lequel la seconde partie de col (209) comporte un second engrenage formé d'un seul tenant ou monté sur celle-ci et s'étendant radialement vers l'extérieur à partir de la seconde partie de col, dans lequel le second engrenage comporte un diamètre extérieur de second engrenage, dans lequel le diamètre extérieur de second engrenage est différent du diamètre extérieur de premier engrenage (107A), et dans lequel le diamètre extérieur de second engrenage est inférieur au diamètre extérieur de premier engrenage (107A) de sorte que le premier engrenage s'étend radialement vers l'extérieur du second engrenage.

2. Panier d'embrayage selon la revendication 1, dans lequel le diamètre extérieur de carter (101A) est différent du diamètre extérieur de premier engrenage (107A).

3. Panier d'embrayage selon la revendication 2, dans lequel le diamètre extérieur de premier engrenage (107A) est inférieur au diamètre extérieur de carter (101A) de sorte que le carter d'embrayage s'étend radialement vers l'extérieur au-delà du premier engrenage.

4. Embrayage pour une transmission, comprenant :
le panier d'embrayage selon une quelconque revendication précédente ;
un élément d'embrayage interne (113, 213) disposé à l'intérieur du panier d'embrayage ;
le panier d'embrayage (103) disposé à l'intérieur du carter d'embrayage entre le carter d'embrayage et un élément d'embrayage interne, le bloc d'embrayage étant relié de manière fonctionnelle au carter d'embrayage et à l'élément d'embrayage interne pour mettre en prise l'élément d'embrayage interne avec le carter d'embrayage lorsqu'il est comprimé ; et
un actionneur d'embrayage (115, 215) conçu pour comprimer le bloc d'embrayage afin de mettre en prise le carter d'embrayage avec l'élément d'embrayage interne.

5. Transmission, comprenant :
un arbre d'entrée présentant une pluralité d'engrenages d'entrée ; et
au moins un embrayage présentant :
un panier d'embrayage selon l'une quelconque des revendications 1 à 3,
dans lequel le premier engrenage est relié à un engrenage d'entrée de la pluralité d'engrenages d'entrée.
